# EUROPEAN PATENT SPECIFICATION

(11) **EP 2 992 279 B1**
(45) Date of publication and mention of the grant of the patent: **30.12.2020**
(21) Application number: 14724620.1
(22) Date of filing: 21.04.2014
(51) Int. Cl.: F25B 41/00, F16L 17/06, F16L 17/10, F16L 19/02, F16L 23/16, F16L 23/18, F16J 15/00, F16J 15/46

(54) **LOW LEAKAGE SEAL FOR LOW PRESSURE SYSTEM**
DICHTUNG MIT GERINGER LECKAGE FUER NIEDERDRUCKSYSTEM
JOINT A FAIBLES FUITES POUR SYSTÈME À BASSE PRESSION

(30) Priority: 29.04.2013 US 201361816962 P
(43) Date of publication of application: 09.03.2016
(73) Proprietor: Carrier Corporation, Farmington, CT 06034 (US)
(72) Inventor: SISHTLA, Vishnu, M., Syracuse, NY 13221 (US)
(74) Representative: Dehns
(86) International application number: PCT/US2014/034750
(87) International publication number: WO 2014/179089

(56) References cited:
- EP-A2- 1 050 699
- WO-A1-2013/152419
- WO-A2-2012/044172
- CH-A- 373 934
- GB-A- 958 345
- US-A- 3 013 404
- US-A- 3 296 824
- US-A- 4 796 896
- US-A- 5 031 410
- US-A- 5 354 101
- US-A1- 2010 181 324

## Description

### BACKGROUND OF THE INVENTION

The invention relates generally to chiller refrigeration systems and, more particularly, to a seal that prevents ambient air from entering an interface of a chiller refrigeration system.

Water cooled centrifugal chillers commonly use low and medium pressure refrigerants; however, low pressure refrigerants have a higher cycle efficiency than medium pressure refrigerants. Because the saturation pressure is lower than the ambient pressure during normal operation, air will leak into the cooler and ultimately travel to the condenser. Air is non-condensable, so the air stays in the condenses and raises the pressure above the saturation vapor pressure, thus causing the compressor to work harder, thereby offsetting the benefit associated with using a low pressure refrigerant. Low pressure chillers typically include a purge system used periodically to remove non-condensables which adds both complexity and cost to the chiller. Such a water cooled chiller is known from US 3,013,404. A chiller refrigeration system according to the preamble of claim 1 is further known from US 5,031,410 or US 3,296,824.

### BRIEF DESCRIPTION OF THE INVENTION

According to an aspect of the invention, there is provided a chiller refrigeration system comprising an interface between first flange and a second flange where the pressure of a refrigerant within the chiller refrigeration system is lower than the ambient air pressure; and a seal wherein the second flange is coaxially aligned and directly in contact with the first flange, the second flange includes at least one groove within which a first sealing mechanism and a second sealing mechanism are positioned, the first sealing mechanism and the second sealing mechanism being separated by a distance such that a chamber configured to receive a pressurized gas is formed between the first scaling mechanism and the second sealing mechanism.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of an exemplary chiller refrigeration system;
FIG. 2 is a perspective view of an exemplary chiller refrigeration system;
FIG. 3 is a cross-sectional view of a seal arranged at an interface between components of the chiller refrigeration system according to an embodiment of the invention; and
FIG. 4 is a cross-sectional view of a seal arranged at an interface between components of the chiller refrigeration system according to another embodiment of the invention.

### DETAILED DESCRIPTION OF THE INVENTION

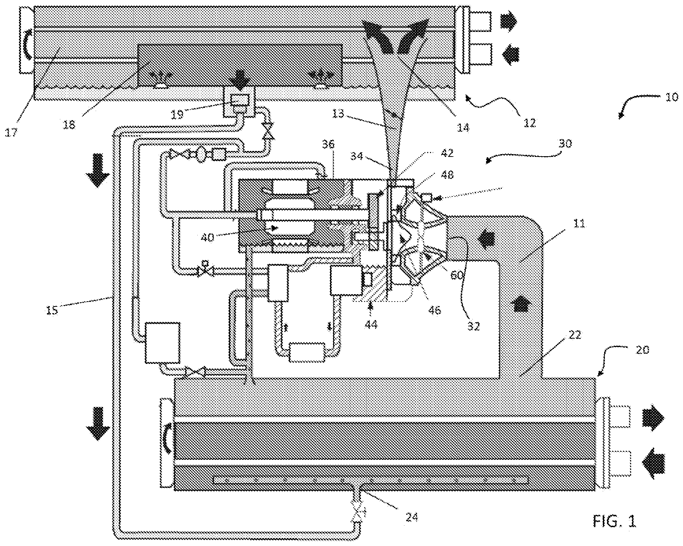

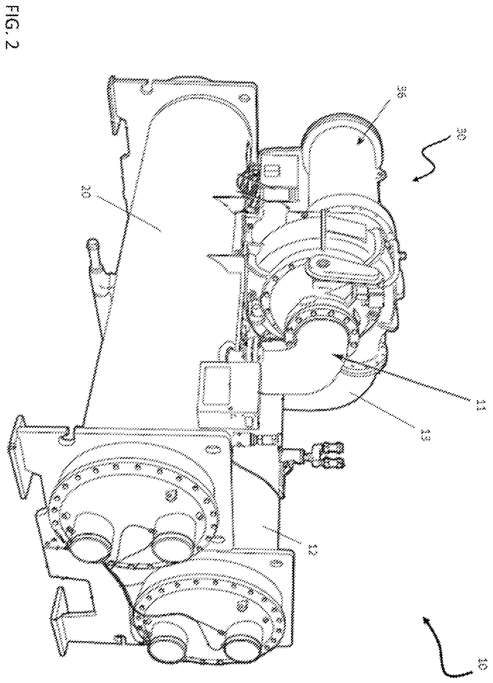

Referring now to FIGS. 1 and 2, the illustrated exemplary chiller refrigeration system 10 includes a compressor assembly 30, a condenser 12, and a cooler or evaporator 20 fluidly coupled to form a circuit. A first conduit 11 extends from adjacent the outlet 22 of the cooler 20 to the inlet 32 of the compressor assembly 30. The outlet 34 of the compressor assembly 30 is coupled by a conduit 13 to an inlet 14 of the condenser 12. In one embodiment, the condenser 12 includes a first chamber 17, and a second chamber 18 accessible only from the interior of the first chamber 17. A float valve 19 within the second chamber 18 is connected to an inlet 24 of the cooler 20 by another conduit 15. Depending on the size of the chiller system 10, the compressor assembly 30 may include a rotary, screw, or reciprocating compressor for small systems, or a screw compressor or centrifugal compressor for larger systems. A typical compressor assembly 30 includes a housing 36 having a motor 40 at one end and a centrifugal compressor 44 at a second, opposite end, with the two being connected by a transmission assembly 42. The compressor 44 includes an impeller 46 for accelerating the refrigerant vapor to a high velocity, a diffuser 48 for decelerating the refrigerant to a low velocity while converting kinetic energy to pressure energy, and a discharge plenum (not shown) in the form of a volute or collector to collect the discharge vapor for subsequent flow to a condenser. Positioned near the inlet 32 of the compressor 30 is an inlet guide vane assembly 60. Because a fluid flowing from the cooler 20 to the compressor 44 must first pass through the inlet guide vane assembly 60 before entering the impeller 46, the inlet guide vane assembly 60 may be used to control the fluid flow into the compressor 44.

The refrigeration cycle within the chiller refrigeration system 10 may be described as follows. The compressor 44 receives a refrigerant vapor from the evaporator/cooler 20 and compresses it to a higher temperature and pressure, with the relatively hot vapor then passing into the first chamber 17 of the condenser 12 where it is cooled and condensed to a liquid state by a heat exchange relationship with a cooling medium, such as water or air for example. Because the second chamber 18 has a lower pressure than the first chamber 17, a portion of the liquid refrigerant flashes to vapor, thereby cooling the remaining liquid. The refrigerant vapor within the second chamber 18 is recondensed by the cool heat exchange medium. The refrigerant liquid then drains into the second chamber 18 located between the first chamber 17 and the cooler 20. The float valve 19 forms a seal to prevent vapor from the second chamber 18 from entering the cooler 20. As the liquid refrigerant passes through the float valve 19, the refrigerant is expanded to a low temperature two phase liquid/vapor state as it passed into the cooler 20. The cooler 20 is a heat exchanger which allows heat energy to migrate from a heat exchange medium, such as water for example, to the refrigerant gas. When the gas returns to the compressor 44, the refrigerant is at both the temperature and the pressure at which the refrigeration cycle began.

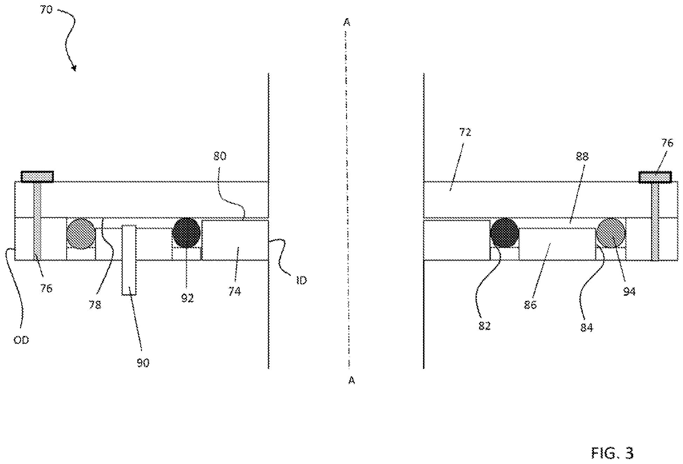

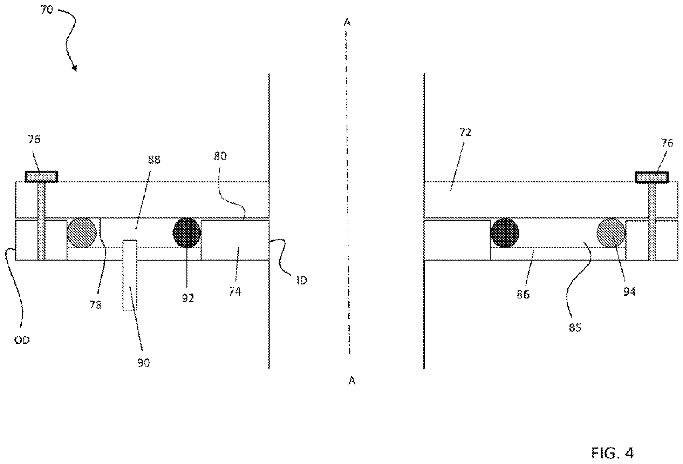

As a result of the low pressure of the refrigerant within the chiller refrigeration system 10, outside air is prone to leak into the system 10 at any of a plurality of interfaces between coupled components of the system 10, such as between fluid conduits and components for example. Exemplary interfaces within the chiller refrigeration system 10 where the pressure of the refrigerant is lower than the ambient air, include, but are not limited to, between the fluid conduit 11 and the suction housing or inlet 32 of the compressor 30, and between the fluid conduit 15 and the inlet 24 of the cooler 20 for example. Referring now to FIGS. 3 and 4, a seal 70 is positioned at an interface between coupled components of the chiller refrigeration system 10 where the pressure of the refrigerant is less than the pressure of the ambient air. The seal 70 includes a first flange 72 integrally formed with a first component of the chiller refrigeration system 10 and a second flange 74 integrally formed with a second component of the chiller refrigeration system 10. The first flange 72 and the second flange 74 are substantially aligned about a central axis A and are positioned directly adjacent one another. The flanges 72, 74 are connected to one another, such as with a plurality of fasteners 76 arranged about the outer periphery of the flanges 72, 74 for example.

In the non-limiting embodiment illustrated in FIG. 3, a first groove 82 is formed in the surface 80 of the second flange 74 facing the first flange 72, generally near the inner diameter ID of the second flange 74. The depth of the first groove 82 extends over only a portion of the thickness of the second flange 74. A second groove 84 having a size and shape similar to the first groove 82 may be formed in the surface 80 of the second flange 74, near an outer diameter OD thereof. The thickness of a portion 86 of the second flange 74 extending between the first groove 72 and the second groove 84 may be reduced such that an internal chamber 88 is formed between the portion 86 of the second flange 74 and the adjacent surface 78 of the first flange 72.

A pipe or tube 90 extends through a hole (not shown) in portion 86 of the second flange 74 to the chamber 88 formed between portion 86 and the first flange 72. The tube 90 is configured to supply a highly pressurized gas, such as discharge gas from the condenser 12 of the chiller refrigeration system 10 for example, into the chamber 88. A first sealing mechanism 92 and a second sealing mechanism 94 are arranged within the first groove 82 and the second groove 84, respectively, and are configured to seal the chamber 88. The first sealing mechanism 92 is configured to prevent air from passing between the first and second flanges 72, 74 into the chiller refrigeration system 10. The second sealing mechanism 94 is configured to prevent the hot, high pressure gas from leaking to the low pressure side of the flanges 72, 74. In one embodiment, the sealing mechanisms 92, 94 are O-rings formed from a material suitable for use with a refrigerant.

In another embodiment, illustrated in FIG. 4, the first groove 82 and the second groove 84 are integrally formed as a single groove 85. In such embodiments, the first sealing mechanism 92 is arranged within the groove 85 near the inner diameter ID of the second flange 74 and the second sealing mechanism 94 is arranged within the groove 85 near the outer diameter OD of the second flange 74. The chamber 88 is the portion of the groove 85 arranged between the first and second sealing mechanisms 92, 94.

By supplying a pressurized gas into the substantially sealed chamber between flanges at an interface in the chiller refrigeration system 10, ambient air is blocked from leaking through the interface into the system 10. As a result, the efficiency of the chiller refrigeration is improved. Because the seal reduces the amount of non-condensable air within the system 10, the purge system used to periodically remove such non-condensables may be substantially reduced or eliminated. The reduction in size and/or capacity of the purge system will result in a cost savings and a simplified chiller refrigeration system 10 design.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A chiller refrigeration system (10), comprising:
an interface between first flange (72) and a second flange (74) where the pressure of a refrigerant within the chiller refrigeration system is lower than the ambient air pressure; and
a seal (70) wherein the second flange is coaxially aligned and directly in contact with the first flange, the second flange includes at least one groove (82; 84; 85) within which a first sealing mechanism (92) is positioned, **characterised in that**
in the at least one groove a second sealing mechanism (94) is positioned, the first sealing mechanism and the second sealing mechanism being separated by a distance such that a chamber (88) configured to receive a pressurized gas is formed between the first sealing mechanism and the second sealing mechanism.

2. The chiller refrigeration system (10) according to claim 1, wherein a pressure of the pressurized gas is greater than a pressure of ambient air adjacent the first flange (72) and the second flange (74).

3. The chiller refrigeration system (10) according to claim 1, wherein the first flange (72) and the second flange (74) are connected to one another with at least one fastener (76).

4. The chiller refrigeration system (10) according to claim 1, further comprising a pipe (90) extending through the second flange (74) into the chamber (88), the pipe being configured to fluidly couple the chamber to a supply of pressurized gas.

5. The chiller refrigeration system (10) according to claim 4, wherein the supply of pressurized gas is a discharge of a condenser (12) of the chiller refrigeration system.

6. The chiller refrigeration system (10) according to claim 1, wherein the first sealing mechanism (92) is arranged near an inner diameter (ID) of the second flange (74) and the second sealing mechanism (94) is arranged near an outer diameter (OD) of the second flange.

7. The chiller refrigeration system (10) according to claim 1, wherein the first sealing mechanism (92) and the second sealing mechanism (94) are o-rings.

8. The chiller refrigeration system (10) according to claim 1, wherein the second flange (74) includes a first groove (82) and a second groove (84) separated by a distance.

9. The chiller refrigeration system (10) according to claim 8, wherein the first groove (82) is arranged near an inner diameter (ID) of the second flange (74) and the second groove (84) is arranged near an outer diameter (OD) of the second flange.

10. The chiller refrigeration system (10) according to claim 8, wherein the first sealing mechanism (92) is arranged within the first groove (82) and the second sealing mechanism (94) is arranged within the second groove (84).

11. The chiller refrigeration system (10) according to claim 10, wherein the first sealing mechanism (92) and the second sealing mechanism (94) are o-rings.

12. The chiller refrigeration system (10) according to claim 8, wherein a portion of the second flange (74) between the first groove (82) and the second groove (84) has a reduced thickness to form the chamber (88).

13. The chiller refrigeration system (10) according to claim 1, wherein the first flange (72) is integrally formed with a first component of the chiller refrigeration system and the second flange (74) is integrally formed with a second component of the chiller refrigeration system.

14. The chiller refrigeration system (10) according to claim 13, wherein the seal (70) is arranged between a fluid conduit and an inlet of a compressor (30) of the chiller refrigeration system.

15. The chiller refrigeration system (10) according to claim 13, wherein the seal (70) is arranged between a fluid conduit and an inlet of a cooler (20) of the chiller refrigeration system.

## Patentansprüche

1. Kompressionskältesystem (10), umfassend:
eine Schnittstelle zwischen einem ersten Flansch (72) und einem zweiten Flansch (74), wo der Druck eines Kältemittels innerhalb des Kompressionskältesystems niedriger ist als der Umgebungsluftdruck; und
eine Dichtung (70), wobei der zweite Flansch koaxial ausgerichtet ist und in direktem Kontakt mit dem ersten Flansch steht, wobei der zweite Flansch mindestens eine Nut (82; 84; 85) einschließt, innerhalb der ein erster Dichtungsmechanismus (92) positioniert ist, **dadurch gekennzeichnet, dass**
in der mindestens einen Nut ein zweiter Dichtungsmechanismus (94) angeordnet ist, wobei der erste Dichtungsmechanismus und der zweite Dichtungsmechanismus durch einen Abstand getrennt sind, so dass zwischen dem ersten Dichtungsmechanismus und dem zweiten Dichtungsmechanismus eine Kammer (88) gebildet wird, die konfiguriert ist, um ein Druckgas aufzunehmen.

2. Kompressionskältesystem (10) nach Anspruch 1, wobei ein Druck des Druckgases größer ist als ein Druck der Umgebungsluft neben dem ersten Flansch (72) und dem zweiten Flansch (74).

3. Kompressionskältesystem (10) nach Anspruch 1, wobei der erste Flansch (72) und der zweite Flansch (74) mit mindestens einem Befestigungsmittel (76) miteinander verbunden sind.

4. Kompressionskältesystem (10) nach Anspruch 1, weiter umfassend ein Rohr (90), das sich durch den zweiten Flansch (74) in die Kammer (88) hinein erstreckt, wobei das Rohr konfiguriert ist, um die Kammer strömungstechnisch an eine Druckgaszufuhr zu koppeln.

5. Kompressionskältesystem (10) nach Anspruch 4, wobei die Druckgaszufuhr eine Entladung eines Kondensators (12) des Kompressionskältesystems ist.

6. Kompressionskältesystem (10) nach Anspruch 1, wobei der erste Dichtungsmechanismus (92) in der Nähe eines Innendurchmessers (ID) des zweiten Flansches (74) angeordnet ist und der zweite Dichtungsmechanismus (94) in der Nähe eines Außendurchmessers (OD) des zweiten Flansches angeordnet ist.

7. Kompressionskältesystem (10) nach Anspruch 1, wobei der erste Dichtungsmechanismus (92) und der zweite Dichtungsmechanismus (94) O-Ringe sind.

8. Kompressionskältesystem (10) nach Anspruch 1, wobei der zweite Flansch (74) eine erste Nut (82) und eine zweite Nut (84) einschließt, die durch einen Abstand voneinander getrennt sind.

9. Kompressionskältesystem (10) nach Anspruch 8, wobei die erste Nut (82) in der Nähe eines Innendurchmessers (ID) des zweiten Flansches (74) angeordnet ist und die zweite Nut (84) in der Nähe eines Außendurchmessers (OD) des zweiten Flansches angeordnet ist.

10. Kompressionskältesystem (10) nach Anspruch 8, wobei der erste Dichtungsmechanismus (92) innerhalb der ersten Nut (82) und der zweite Dichtungsmechanismus (94) innerhalb der zweiten Nut (84) angeordnet ist.

11. Kompressionskältesystem (10) nach Anspruch 10, wobei der erste Dichtungsmechanismus (92) und der zweite Dichtungsmechanismus (94) O-Ringe sind.

12. Kompressionskältesystem (10) nach Anspruch 8, wobei ein Abschnitt des zweiten Flansches (74) zwischen der ersten Nut (82) und der zweiten Nut (84) eine reduzierte Dicke aufweist, um die Kammer (88) zu bilden.

13. Kompressionskältesystem (10) nach Anspruch 1, wobei der erste Flansch (72) einstückig mit einer ersten Komponente des Kompressionskältesystems ausgebildet ist und der zweite Flansch (74) einstückig mit einer zweiten Komponente des Kompressionskältesystems ausgebildet ist.

14. Kompressionskältesystem (10) nach Anspruch 13, wobei die Dichtung (70) zwischen einer Flüssigkeitsleitung und einem Einlass eines Kompressors (30) des Kompressionskältesystems angeordnet ist.

15. Kompressionskältesystem (10) nach Anspruch 13, wobei die Dichtung (70) zwischen einer Flüssigkeitsleitung und einem Einlass eines Kühlers (20) des Kompressionskältesystems angeordnet ist.

## Revendications

1. Système frigorifique de refroidisseur (10), comprenant :
une interface entre une première bride (72) et une seconde bride (74) où la pression d'un frigorigène à l'intérieur du système frigorifique de refroidisseur est inférieure à la pression d'air ambiant ; et
un joint d'étanchéité (70) dans lequel la seconde bride est alignée de manière coaxiale et directement en contact avec la première bride, la seconde bride inclut au moins une rainure (82 ; 84 ; 85) à l'intérieur de laquelle est positionné un premier mécanisme d'étanchéité (92) ; **caractérisé en ce que**
dans la au moins une rainure est positionné un second mécanisme d'étanchéité (94), le premier mécanisme d'étanchéité et le second mécanisme d'étanchéité sont séparés par une distance de telle manière qu'une chambre (88) configurée pour recevoir un gaz sous pression soit formée entre le premier mécanisme d'étanchéité et le second mécanisme d'étanchéité.

2. Système frigorifique de refroidisseur (10) selon la revendication 1, dans lequel une pression du gaz sous pression est supérieure à une pression d'air ambiant en un endroit adjacent à la première bride (72) et à la seconde bride (74).

3. Système frigorifique de refroidisseur (10) selon la revendication 1, dans lequel la première bride (72) et la seconde bride (74) sont reliées l'une à l'autre à l'aide d'au moins une fixation (76).

4. Système frigorifique de refroidisseur (10) selon la revendication 1, comprenant en outre un tuyau (90) s'étendant à travers la seconde bride (74) jusque dans la chambre (88), le tuyau étant configuré pour coupler de manière fluidique la chambre à une alimentation en gaz sous pression.

5. Système frigorifique de refroidisseur (10) selon la revendication 4, dans lequel l'alimentation en gaz sous pression est une décharge d'un condenseur (12) du système frigorifique de refroidisseur.

6. Système frigorifique de refroidisseur (10) selon la revendication 1, dans lequel le premier mécanisme d'étanchéité (92) est agencé à proximité d'un diamètre intérieur (ID) de la seconde bride (74) et le second mécanisme d'étanchéité (94) est disposé à proximité d'un diamètre extérieur (OD) de la seconde bride.

7. Système frigorifique de refroidisseur (10) selon la revendication 1, dans lequel le premier mécanisme d'étanchéité (92) et le second mécanisme d'étanchéité (94) sont des joints toriques.

8. Système frigorifique de refroidisseur (10) selon la revendication 1, dans lequel la seconde bride (74) inclut une première rainure (82) et une seconde rainure (84) séparées par une distance.

9. Système frigorifique de refroidisseur (10) selon la revendication 8, dans lequel la première rainure (82) est agencée à proximité d'un diamètre intérieur (ID) de la seconde bride (74) et la seconde rainure (84) est agencée à proximité d'un diamètre extérieur (OD) de la seconde bride.

10. Système frigorifique de refroidisseur (10) selon la revendication 8, dans lequel le premier mécanisme d'étanchéité (92) est agencé à l'intérieur de la première rainure (82) et le second mécanisme d'étanchéité (94) est agencé à l'intérieur de la seconde rainure (84).

11. Système frigorifique de refroidisseur (10) selon la revendication 10, dans lequel le premier mécanisme d'étanchéité (92) et le second mécanisme d'étanchéité (94) sont des joints toriques.

12. Système frigorifique de refroidisseur (10) selon la revendication 8, dans lequel une partie de la seconde bride (74) entre la première rainure (82) et la seconde rainure (84) a une épaisseur réduite pour former la chambre (88).

13. Système frigorifique de refroidisseur (10) selon la revendication 1, dans lequel la première bride (72) est formée d'un seul tenant avec un premier composant du système frigorifique de refroidisseur et la seconde bride (74) est formée d'un seul tenant avec un second composant du système frigorifique de refroidisseur.

14. Système frigorifique de refroidisseur (10) selon la revendication 13, dans lequel le joint d'étanchéité (70) est agencé entre un conduit de fluide et une entrée d'un compresseur (30) du système frigorifique de refroidisseur.

15. Système frigorifique de refroidisseur (10) selon la revendication 13, dans lequel le joint d'étanchéité (70) est disposé entre un conduit de fluide et une entrée d'un refroidisseur (20) du système frigorifique de refroidisseur.
